# EUROPÄISCHE PATENTSCHRIFT

(11) **EP 3 566 254 B1**
(45) Veröffentlichungstag und Bekanntmachung des Hinweises auf die Patenterteilung: **09.10.2024**
(21) Anmeldenummer: 17835666.3
(22) Anmeldetag: 19.12.2017
(51) Int. Cl.: H01M 50/645

(54) **STOPFEN ZUM VERSCHLIESSEN UND ABDICHTEN EINER ÖFFNUNG IN EINEM GEHÄUSE EINES ENERGIESPEICHERSYSTEMS UND ENERGIESPEICHERSYSTEM**
SEALING PLUG FOR A BATTERY HOUSING AND ENERGY STORAGE SYSTEM
BOUCHON POUR ÉTANCHER UNE BOITE D'UN SYSTÈME DE STOCKAGE D'ÉNERGIE ET SYSTÈME DE STOCKAGE D'ÉNERGIE

(30) Priorität: 03.01.2017 DE 102017100049
(43) Veröffentlichungstag der Anmeldung: 13.11.2019
(73) Patentinhaber: Clarios Germany GmbH & Co. KG, 30419 Hannover (DE)
(72) Erfinder: SCHWAB, Julius, 30161 Hannover (DE); KOCH, Ingo, 31789 Hameln (DE); STAFFELDT, Armin, 27389 Lauenbrück (DE); IDE, Bernd, 30419 Hannover (DE)
(74) Vertreter: Meissner Bolte Partnerschaft mbB
(86) Internationale Anmeldenummer: PCT/EP2017/083644
(87) Internationale Veröffentlichungsnummer: WO 2018/127410

(56) Entgegenhaltungen:
- EP-A1- 0 920 063
- EP-A1- 3 394 916
- EP-A2- 1 156 538
- EP-A2- 1 248 315
- US-A1- 2003 047 884

## Beschreibung

Die vorliegende Erfindung betrifft einen Stopfen zum Verschließen und Abdichten einer Öffnung in einem Gehäuse eines Energiespeichersystems. Ferner betrifft die Erfindung ein Energiespeichersystem mit mindestens einem solchen Stopfen.

Bereits bekannte Stopfen zum Verschließen einer Öffnung in einem Gehäuse von beispielsweise einem Energiespeichersystem weisen üblicherweise Rund- oder Flachdichtungsringe auf, welche lose in einer Nut des Stopfens aufgenommen sind und diese meist nur teilweise ausfüllen. Insbesondere liegen solche Dichtungsringe herkömmlicher Stopfen meist in Form von O-Ringen vor. Diese basieren darauf, durch eine beim Einschraubvorgang anfallende radiale Quetschbeanspruchung verformt zu werden und aufgrund dieser Quetschbeanspruchung eine Dichtwirkung zu erzeugen.

Derartige Dichtungsringe unterliegen allerdings einem hohen Verschleiß. So kann beispielsweise ein häufiges Ein- und Ausbauen des Stopfens zu einer Verschlechterung des Materials der Dichtungsringe, was zu einer Reduzierung der Dichtwirkung führen kann. Auf der anderen Seite kann das Material auch durch häufige Temperaturwechsel geschädigt werden. Auch dies führt zu einer verminderten Dichtwirkung. Darüber hinaus müssen separat hergestellte herkömmliche Dichtungsringe mittels eines aufwändigen Montageverfahrens montiert werden. Dadurch ist die Montage der Dichtungsringe auf dem Stopfen zeitaufwändig und kostenintensiv.

Die Dokumente US 2003/047884 A1, EP 1 248 315 A2 und EP 3 394 916 A1, bei dem es sich um einen nachveröffentlichten Stand der Technik gemäß Art. 54(3) EPÜ handelt, betreffen herkömmliche Stopfen zum Abschließen und Dichten einer Öffnung in einem Gehäuse in einem Energiespeichersystem, welche im Wesentlichen O-Ring-artige Dichtelemente aufweisen, welche eine Dichtwirkung durch eine in radialer Richtung des Stopfens wirkenden Kraft erzeugen.

Die EP 1 156 538 A2 betrifft eine weitere herkömmliche Stopfenanordnung für einen Akkumulator, die eine vorzugsweise als O-Ring ausgebildete Runddichtung und eine Lamellendichtung aufweist. Insbesondere dichtet die Runddichtung einen Hohlraum gegenüber der den Akkumulator umgebenden Atmosphäre ab und die Lammelendichtung dichtet den Hohlraum gegenüber dem Zelleninneren ab. Der Hohlraum steht über eine in der Stopfenanordnung ausgebildeten Öffnung mit dem Zelleninneren strömungstechnisch in Verbindung um eine Entgasung des Akkumulators und gegebenenfalls einen Rückfluss von Säure in das Zelleninnere zu ermöglichen.

EP 0 920 063 A1 betrifft ein weiteres herkömmliches Stopfensystem zum Verschließen von Zellenöffnungen eines Akkumulators, das einen in eine Zellenöffnung einsetzbaren Stopfenkörper, in welchen ein Stopfen und ein Ventilelement angeordnet sind, aufweist. Der Stopfenkörper ist im Wesentlichen aus einem Kreiszylinder gefertigt, welcher in einem Mittelteil einen gegenüber dem Stopfenkörperaußendurchmesser reduzierten Abschnitt mit einer Öffnung aufweist. Der Stopfenkörper weist ein erstes als angeformten O-Ring ausgebildetes Dichtungselement zum Dichten gegenüber einer äußeren Umgebung auf und kann unterhalb eines im Mittelteil ausgebildeten reduzierten Abchnittes ein zweites als O-Ring ausgebildetes Dichtungselement zum Dichten gegenüber dem Gehäuseinneren aufweisen. Alternativ kann die Stopfenanordnung ein nicht rotationssymmetrisch ausgebildetes Dichtelement aufweisen, das bereichsweise einen Volumenraum freilässt, der eine strömungstechnische Verbindung zum Zellenineren bereitstellt.

Die Aufgabe der vorliegenden Erfindung ist es daher, einen verbesserten Stopfen bereitzustellen, welcher die Nachteile des Standes der Technik nicht aufweist und darüber hinaus einfach und kostengünstig herzustellen und zu montieren ist.

Im Hinblick auf den Stopfen wird die der Erfindung zugrundeliegende Aufgabe erfindungsgemäß durch den Gegenstand des unabhängigen Patentanspruchs 1 gelöst. Im Hinblick auf das Energiespeichersystem zum Einsatz in einem Fahrzeug mit mindestens einem solchen Stopfen wird die der Erfindung zugrundeliegende Aufgabe durch den Gegenstand des Patentanspruchs 11 gelöst. Vorteilhafte Weiterbildungen sind in den abhängigen Patentansprüchen angegeben.

Demnach wird erfindungsgemäß ein Stopfen zum Verschließen und Abdichten einer Öffnung in einem Gehäuse eines Energiespeichersystems, insbesondere zum Verschließen und Abdichten einer Öffnung in einem Gehäuse eines Bleisäure-Ackumulators, angegeben. Der Stopfen weist dabei einen Verbindungsbereich, der dazu ausgebildet ist, mit der Öffnung des Energiespeichersystems in Eingriff zu kommen, und einen in Axialrichtung des Stopfens oberhalb des Verbindungsbereichs angeordneten Dichtbereich auf. Der Dichtbereich ist dazu ausgebildet, ein Dichtelement aufzunehmen, welches dazu ausgelegt ist, im eingebauten Zustand des Stopfens durch eine vollständig in Axialrichtung des Stopfens wirkende Kraft verformt zu werden.

Die Vorteile der Erfindung liegen auf der Hand. Durch den erfindungsgemäßen Stopfen kann eine Öffnung eines Gehäuses kostengünstig und sicher verschlossen und abgedichtet werden. Insbesondere wird das Dichtelement, welches durch eine zumindest teilweise, insbesondere vollständig, in Axialrichtung des Stopfens wirkende Kraft verformt wird, auch bei höheren thermischen und/oder mechanischen (dynamischen) Belastungen nicht geschwächt. Beispielsweise können der Stopfen und das Gehäuse des Energiespeichersystems zumindest minimale gegenläufige Bewegungen zueinander ausführen, welche beispielsweise durch Vibrationen des Energiespeichersystems verursacht werden können. Solche gegenläufige Bewegungen würden bei einem herkömmlichen Dichtelement - wie beispielsweise einem O-Ring - schnell zu einer Verschlechterung des Materials des Dichtelements und damit zu einer Verschlechterung der Dichtwirkung führen. Dadurch dass das erfindungsgemäße Dichtelement durch eine zumindest teilweise, insbesondere vollständig, in Axialrichtung des Stopfens wirkende Kraft verformt wird, ist die mechanische Belastung durch Vibrationen bzw. durch gegenläufige Bewegungen des Stopfens und des Gehäuses an dem Dichtelement gering. Dadurch dass an dem Dichtelement darüber hinaus zumindest im Wesentlichen keine durch Radialkräfte hervorgerufene Verformung entsteht, wird auch vermieden, dass sich das Material des Dichtelements verschlechtert. Von daher kann eine Dichtwirkung auch bei dynamischen Belastungen gewährleistet werden.

Auch kann ein Längen des Stopfens dadurch vermieden bzw. reduziert werden, dass das Dichtelement in Axialrichtung des Stopfens gesehen oberhalb des Verbindungsbereichs angeordnet ist. Das Längen des Stopfens würde zu einer Kraftreduzierung und damit zu einer Herabsetzung der Dichtwirkung führen.

Dadurch dass das Dichtelement zumindest im Wesentlichen keine radiale Verformung erfährt, wird die mechanische und/oder thermische Beständigkeit des Dichtelements zudem auf vorteilhafte Weise verbessert.

Der Dichtbereich ist dabei dazu ausgebildet, das Dichtelement derart aufzunehmen, dass eine Dichtwirkung des Dichtelements durch die vollständig in Axialrichtung des Stopfens wirkende Kraft erzeugt wird.

Dadurch dass die Dichtwirkung durch die zumindest teilweise, insbesondere vollständig, in Axialrichtung des Stopfens wirkende Kraft erzeugt wird, wird die Dichtwirkung auch bei höheren thermischen und/oder mechanischen (dynamischen) Beanspruchungen dauerhaft gewährleistet. Insbesondere wird die Dichtwirkung durch die bei der Montage des Stopfens entstehende, zumindest teilweise, insbesondere vollständig, in Axialrichtung des Stopfens wirkende Kraft erzeugt.

Einen weiteren Anteil zur Dichtwirkung trägt auch die durch die Montage bedingte Rückstellkraft des Dichtelements bei. Durch diese Kräftekopplung kann die Dichtwirkung auch bei hohen thermischen Einflüssen aufrechterhalten werden, welche andernfalls eine Reduzierung der beiden Kräfte, beispielsweise durch Veränderung der Werkstoffeigenschaften oder durch Erzeugen von "Setz"-Bewegungen, bewirken können. Unter dem Erzeugen von "Setz"-Bewegungen oder "Setzen" wird in diesem Zusammenhang ein Verlust der Vorspannkraft der Verbindung im eingebauten Zustand des Stopfens verstanden.

Auch weist ein Querschnitt des Dichtelements, insbesondere schon in einem nicht-eingebauten Zustand des Stopfens, zumindest im Wesentlichen eine L-Form auf.

Durch eine im Wesentlichen von einer Kreisform verschiedenen Formgebung des Querschnitts des Dichtelements wird gewährleistet, dass das Dichtelement zumindest im Wesentlichen, insbesondere vollständig, in Axialrichtung verformt werden kann, insbesondere ohne das Dichtelement auch in Radialrichtung zu verformen. Dadurch wird zum einen die Montage des Stopfens, insbesondere eine wiederholte Montage und/oder Demontage des Stopfens, erleichtert, zum anderen wird die Dichtwirkung auch bei höheren thermischen und/oder mechanischen (dynamischen) Belastungen weiter vorteilhafterweise verbessert.

Dabei weist das Dichtelement einen ersten Bereich auf einer dem Verbindungsbereich zugewandten Seite des Dichtelements und einen zweiten Bereich auf einer dem Verbindungsbereich abgewandten Seite des Dichtelements auf.

Ferber weist der zweite Bereich des Dichtelements schon in einem nicht-eingebauten Zustand des Stopfens einen größeren Außendurchmesser auf als der erste Bereich.

Dadurch wird vorteilhafterweise gewährleistet, dass im eingebauten Zustand des Stopfens die in Axialrichtung des Stopfens wirkende Kraft aufgenommen werden kann, und zwar ohne das Dichtelement in einer radialen Richtung ebenfalls zu verformen. Darüber hinaus wird die Auflagefläche bzw. die Kontaktierungsfläche des Dichtelements vergrößert. Dadurch erhöht sich auch vorteilhafterweise die Dichtwirkung des Dichtelements.

Darüberhinaus ist mindestens ein Bereich des Dichtelements vollständig umlaufend und rotationssymmetrisch ausgebildet. Dadurch kann das Dichtelement vorteilhafterweise einfach gefertigt werden. Dies kann darüber hinaus die Fertigungskosten senken.

Gemäß einem weiteren Aspekt der Erfindung steht das Dichtelement, insbesondere ein zweiter Bereich des Dichtelements, in einem eingebauten Zustand des Stopfens in Eingriff mit einer Dichtrippe, welche sich entlang eines inneren Umfangs der den Stopfen aufnehmenden Öffnung, insbesondere eines einen Stopfenkörper aufnehmenden Bereichs der Öffnung, in der Axialrichtung des Stopfens gesehen nach oben in Richtung des Dichtbereichs des Stopfens erstreckt, und welche dazu ausgelegt ist, die zumindest teilweise, insbesondere vollständig, in Axialrichtung des Stopfens wirkende Kraft auf das Dichtelement, insbesondere auf den zweiten Bereich des Dichtelements, auszuüben.

Dabei weist der Stopfen einen Stopfenkopf und den Stopfenkörper auf, wobei der Stopfenkörper wiederum den Verbindungsbereich und den Dichtbereich aufweist.

Dabei grenzt der Dichtbereich auf der einen Seite an dem Stopfenkopf und auf der gegenüberliegenden Seite an dem Verbindungsbereich an.

Durch die mit dem Dichtelement zusammenwirkende Dichtrippe entsteht vorteilhafterweise eine Kräftekopplung, die die Dichtwirkung des Dichtelements verstärken kann. Dabei entsteht die Kräftekopplung zum einen durch die bei der Montage entstehende in Axialrichtung des Stopfens wirkende Kraft, und zum anderen durch eine Rückstellkraft des Dichtelements, welche durch die Axialrichtung des Stopfens wirkende Kraft hervorgerufen wird. Mit dieser Kräftekopplung kann die Dichtwirkung vorteilhafterweise auch bei hohen thermischen und/oder mechanischen (dynamischen) Einflüssen aufrechterhalten werden. Solche hohen thermischen und/oder mechanischen Einflüsse können zum einen eine Reduzierung der beiden Kräfte bewirken, insbesondere durch eine Veränderung der Werkstoffeigenschaften oder ein Erzeugen von "Setz"-Bewegungen, d.h. einen Verlust der Vorspannkraft der Verbindung im eingebauten Zustand des Stopfens.

Gemäß einem weiteren Aspekt der Erfindung weist der Stopfen im Dichtbereich eine entlang eines Umfangs des Stopfens verlaufende Nut auf, in welche das Dichtelement zumindest bereichsweise angespritzt ist.

Dadurch wird vorteilhafterweise eine sichere Verbindung zwischen dem Stopfen auf der einen Seite und dem Dichtelement auf der anderen Seite erreicht. Insbesondere kann durch das Anspritzen des Dichtelements die äußerste Oberfläche des Stopfens zumindest bereichsweise aufgeschmolzen werden. Dadurch kann eine stoffschlüssige Verbindung zwischen dem Stopfen und dem Dichtelement entstehen. Darüber hinaus ist das Anspritzen des Dichtelements an den Stopfen einfach realisierbar, beispielsweise in einem (bekannten) Zwei-Komponenten-Spritzgießverfahren. Dadurch dass die Nut bereits bereichsweise die Form des Dichtelements vorgibt bzw. dieser zumindest bereichsweise entspricht, können darüber hinaus vorteilhafterweise Kosten eingespart werden, da das Werkzeug weniger kompliziert ausgebildet sein muss.

Gemäß einem weiteren Aspekt der Erfindung ist der Stopfen aus einem ersten Kunststoffmaterial, insbesondere aus einem thermoplastischen Material, gefertigt, insbesondere spritzgegossen. Dadurch können die Material- und die Fertigungskosten eines Stopfens vorteilhafterweise niedrig gehalten werden.

Gemäß einem weiteren Aspekt der Erfindung ist das Dichtelement aus einem zweiten Kunststoffmaterial, insbesondere einem Elastomer, einem thermoplastischen Elastomer, einem Silikon und/oder einer silikonähnlichen Substanz, gefertigt.

Durch eine derartige Materialwahl können zum einen die Fertigungs- und Materialkosten niedrig gehalten werden, und zum anderen können gute Dichteigenschaften erzielt werden. Darüber hinaus kann durch eine geeignete Materialwahl des Dichtelements die Wirkung der Kräftekopplung vorteilhafterweise weiter gesteigert werden. Insbesondere kann dadurch die Dichtwirkung des Dichtelements auch bei hohen thermischen und/oder mechanischen (dynamischen) Einflüssen gewährleistet werden. Auch kann die Dichtwirkung beim Auftreten einer "Setz"-Bewegung, d.h. dem Verlust der Vorspannungskraft, aufrechterhalten werden.

Gemäß einem weiteren Aspekt der Erfindung ist der Stopfen von der Öffnung des Gehäuses des Energiespeichersystems vollständig aufnehmbar oder aufgenommen, und zwar derart, dass der Stopfen mit einer Außenseite des Gehäuses bündig abschließt.

Dadurch kann vorteilhafterweise eine unnötige Vergrößerung der Gehäuseabmessungen vermieden werden. Auch kann dies die Handhabungssicherheit steigern, da eine Verletzungsgefahr, welche beispielsweise bei einem herausstehenden Stopfen an etwaigen scharfen Kanten desselben bestünde, herabgesetzt werden kann.

Gemäß einem weiteren Aspekt der Erfindung weist der Verbindungsbereich des Stopfens ein Außengewinde zum form- und kraftschlüssigen Verbinden des Stopfens mit der Öffnung auf.

Dadurch kann vorteilhafterweise eine sichere und dennoch lösbare Verbindung zwischen dem Gehäuse und dem Stopfen realisiert werden.

Gemäß einem weiteren Aspekt der Erfindung ist der Verbindungsbereich als Steckverbindung zum form- und/oder kraftschlüssigen Verbinden des Stopfens mit der Öffnung ausgebildet.

Im Vergleich zu einer Schraubverbindung kann eine Steckverbindung schneller montiert und demontiert werden und ist darüber hinaus einfacher zu fertigen. An der Steckverbindung kann ferner mindestens eine Rastnase ausgebildet sein, um den Stopfen formschlüssig mit einer entsprechenden Ausnehmung in der Öffnung des Gehäuses zu verbinden.

Gemäß einem weiteren Aspekt der Erfindung ist in dem Dichtbereich zwischen dem Dichtelement und dem Verbindungsbereich ein umlaufender Vorsprung angeordnet, durch welchen das Dichtelement um 2 mm bis 6 mm, bevorzugt um 3 mm bis 5 mm, von dem Verbindungsbereich, insbesondere einem in der Axialrichtung des Stopfens gesehen obersten Gewindegang des Verbindungsbereichs, beabstandet ist.

Dadurch kann vorteilhafterweise der Abstand zwischen dem Dichtelement und dem Verbindungsbereich reduziert werden, wodurch eine Kräftereduzierung durch Längen des Stopfenkörpers, insbesondere des Verbindungsbereichs, vermieden bzw. reduziert werden kann. Durch eine solche Kräftereduzierung würde jedoch die Dichtwirkung des Dichtelements herabgesetzt werden.

Gemäß einem weiteren Aspekt der Erfindung ist das Dichtelement, insbesondere ein erster Bereich des Dichtelements, auch im eingebauten Zustand des Stopfens in radialer Richtung des Stopfens zumindest im Wesentlichen unverformt.

Dadurch ergibt sich der Vorteil, dass das Material des Dichtelements auch bei wiederholter Montage/Demontage nicht verschlechtert wird, da in radialer Richtung keine Quetschbeanspruchung bzw. Kraft aufgebracht ist. So kann die Dichtwirkung des Stopfens auch nach mehrmaligen Montage/Demontage-Vorgängen, beispielsweise bei Nachfüllvorgängen, gewährleistet werden.

Des Weiteren ist gemäß dem Gegenstand des Patentanspruchs 11 ein Energiespeichersystem zum Einsatz in einem Fahrzeug angegeben, das eine Vielzahl von Energiespeicherzellen und ein Gehäuse, das dazu ausgelegt ist, die Vielzahl von Energiespeicherzellen aufzunehmen, und das mindestens eine Öffnung, insbesondere mindestens eine Füllöffnung zum Füllen des Gehäuses mit einem flüssigen Elektrolyten, aufweist. Dabei ist jeweils eine Öffnung mit Hilfe eines der jeweiligen Öffnung zugeordneten und bereits beschriebenen Stopfens verschließbar oder verschlossen.

Dadurch können Öffnungen in dem Energiespeichersystem vorteilhafterweise einfach und kostengünstig verschlossen werden. Insbesondere können die Öffnungen mehrmals geöffnet beziehungsweise verschlossen werden, wenn beispielsweise Wasser und/oder flüssiger Elektrolyt nachgefüllt werden muss, ohne die Dichtwirkung des Dichtelements herabzusetzen.

Die Erfindung wird nachstehend, auch hinsichtlich ihrer Merkmale und Vorteile, anhand der Beschreibung von Ausführungsformen unter Bezugnahme auf die beiliegenden Zeichnungen näher erläutert. Diese zeigen in:
- FIG. 1: eine schematische Darstellung eines Fahrzeugs;
- FIG. 2: eine schematische Darstellung eines Stopfens gemäß der vorliegenden Erfindung im nicht-eingebauten Zustand;
- FIG. 3: eine schematische Darstellung einer den erfindungsgemäßen Stopfen aufnehmenden Öffnung in einem Gehäuse;
- FIG. 4: eine schematische Darstellung des Stopfens und der Öffnung im eingebauten Zustand des Stopfens; und
- FIG. 5: eine schematische Detail-Darstellung des mit X gekennzeichneten Bereichs aus FIG. 4.

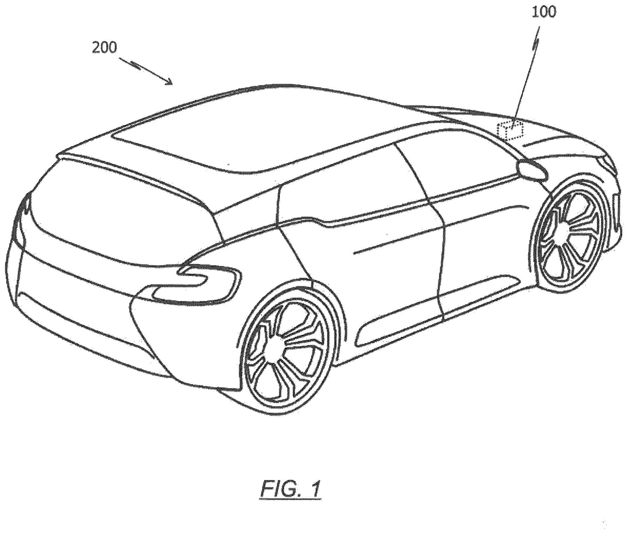

Nachfolgend wird der erfindungsgemäße Stopfen unter Bezugnahme auf die Darstellungen in den FIGS. 1 bis 5 genauer beschrieben. Gleiche oder gleichwirkende Elemente und Funktionen sind hierbei mit denselben oder ähnlichen Bezugszeichen versehen.

FIG. 1 zeigt eine schematische Darstellung eines Fahrzeugs 200, welches mindestens ein Energiespeichersystem 100 aufweist. Das Energiespeichersystem 100 weist ferner eine Vielzahl von Energiespeicherzellen auf, wobei mehrere Energiespeicherzellen darüber hinaus in einzelne Energiespeichermodule zusammengefasst werden können. Das Energiespeichersystem 100 kann hierbei in einem in Fahrtrichtung vorderen Bereich des Fahrzeugs 200, in einem hinteren Bereich des Fahrzeugs 200 und/oder in einem Bereich unterhalb der Sitze, insbesondere unterhalb des Fahrersitzes, angeordnet sein.

Das Fahrzeug 200 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus oder ein Wohnmobil verstanden werden kann. Es ist allerdings genauso gut denkbar, dass das Fahrzeug 200 auch als jedwede Baumaschine, E-Roller, E-Fahrrad, Rasenmäher, Rollstuhl oder dergleichen ausgebildet sein kann.

Das Fahrzeug 200 wird durch eine Antriebseinheit angetrieben. Bei der Antriebseinheit kann es sich um einen Verbrennungsmotor, einen Elektromotor oder eine Kombination hiervon handeln. Ein Fahrzeug 200, welches ausschließlich mit einem Elektromotor angetrieben wird, wird als Elektro-Fahrzeug bezeichnet. Ein Fahrzeug 200, welches sowohl einen Elektromotor als auch einen Verbrennungsmotor aufweist, wird als Hybrid-Fahrzeug bezeichnet. Hybridfahrzeuge können dabei in Mikrohybrid-, Mildhybrid-, Vollhybrid- und Plug-In-Hybridfahrzeugen untergliedert werden.

In FIG. 1 ist das Energiespeichersystem 100 in einem in Fahrtrichtung des Fahrzeugs 200 gesehenen vorderen Bereichs angedeutet.

Das Energiespeichersystem 100 weist im Allgemeinen eine Vielzahl von Energiespeicherzellen auf. Mehrere solcher Energiespeicherzellen können darüber hinaus in einem Energiespeichermodul zusammengefasst sein, wobei diese Energiespeicherzellen elektrisch in Reihe und/oder elektrisch parallel geschaltet sind. Das Energiespeichersystem 100 kann dann eine Vielzahl von solchen Energiespeichermodulen aufweisen, die elektrisch in Reihe und/oder elektrisch parallel miteinander verbunden werden.

Das Energiespeichersystem 100 kann dabei auf einer Bleisäure-Technologie, einer Lithium-Ionen-Technologie, oder einer Nickel-Metallhydrid-Technologie basieren, ist aber nicht darauf beschränkt.

Des Weiteren weist ein Energiespeichersystem 100 ein Gehäuse 110 auf, das dazu ausgelegt ist, die Vielzahl von Energiespeicherzellen bzw. die Vielzahl von Energiespeichermodulen aufzunehmen. Das Gehäuse 110 kann dabei eine Vielzahl von Wandelementen aufweisen, welche einen die Energiespeicherzellen bzw. die Energiespeichermodule aufnehmenden Innenraum des Gehäuses 110 begrenzen. Dabei ist das im eingebauten Zustand des Energiespeichersystems 100 gesehene obere (zumindest im Wesentlichen horizontale) Wandelement meist als (aufsetzbarer) Gehäusedeckel ausgebildet. Dabei weist der Gehäusedeckel zwei Anschlusspole auf, welche verbindbar oder verbunden mit den jeweiligen positiven und negativen Anschlüssen der Energiespeicherzellen bzw. der Energiespeichermodule sind.

Das Gehäuse 110 des Energiespeichersystems 100 kann dabei aus einem Kunststoff gefertigt sein. Beispielsweise kann ein Acryl-Butadien-Styrol, Polycarbonat, Polyamid, Polyvinylchlorid, Polyethylenterephthalat, Polyoxymethylen, Polyolefine, wie Polyethylen und/oder Polypropylen, oder ein Copolymerisat hiervon gewählt werden.

Darüber hinaus ist in dem Gehäuse 110 des Energiespeichersystems 100, insbesondere in dem Gehäusedeckel, mindestens eine Öffnung 120 angeordnet. Beispielsweise kann es sich bei einer derartigen Öffnung 120 um eine Füllöffnung zum Füllen des Gehäuses 110 mit einem flüssigen Elektrolyten handeln. Genauso gut kann diese Öffnung 120 allerdings auch zum zumindest temporären Einführen von Messelementen, wie beispielsweise einem Säureindikator oder dergleichen, ausgebildet sein. Solche Öffnungen 120 sollen jedoch im Betrieb, d.h. nach Vollendung eines Füllvorgangs bzw. eines Messvorgangs, wieder verschlossen werden. Dazu ist jeweils eine Öffnung 120 mit Hilfe eines erfindungsgemäßen, der jeweiligen Öffnung 120 zugeordneten Stopfens 1 verschließbar oder verschlossen.

Es ist allerdings genauso gut denkbar, dass derartige Öffnungen 120 auch in einem Gehäuse eines Energiespeichermoduls bzw. in einem Gehäuse einer Energiespeicherzelle vorhanden sind. Auch solche Öffnungen können mit Hilfe des erfindungsgemäßen Stopfens 1 verschlossen werden.

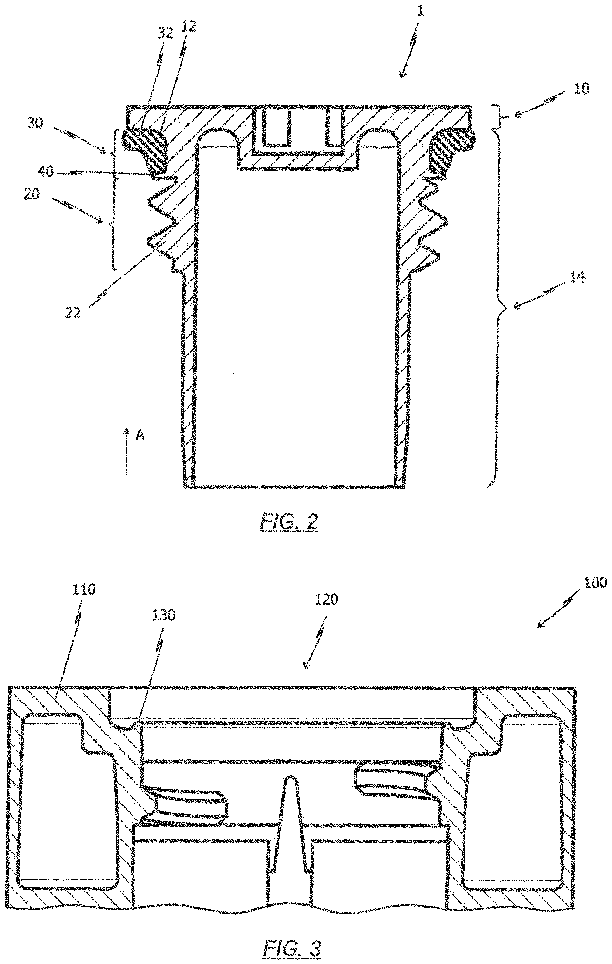

FIG. 2 zeigt den erfindungsgemäßen Stopfen 1 im nicht-eingebauten Zustand. Ein solcher erfindungsgemäße Stopfen 1 kann zum Verschließen und Abdichten einer Öffnung 120 eines Energiespeichersystems 100, eines Energiespeichermoduls und/oder einer Energiespeicherzelle verwendet werden.

In Bezug auf den Stopfen 1 sind in der vorliegenden Anmeldung relative Begriffe wie folgt auszulegen. So bedeutet "in Axialrichtung A des Stopfens 1 gesehen oben bzw. oberhalb" im eingebauten Zustand des Stopfens 1 gesehen in Richtung eines Äußeren des Gehäuses 120 und "in Axialrichtung A des Stopfens 1 gesehen unterhalb" im eingebauten Zustand des Stopfens 1gesehen in Richtung des Innenraums des Gehäuses 120. D.h., dass der Begriff "oberhalb" bzw. "unterhalb" nicht zwingend mit einer Lage in vertikaler Richtung übereinstimmen muss. Vielmehr bedeutet es, beispielsweise in einem Fall, in welchem die Öffnung 120 in einem (seitlichen) Wandelement des Gehäuses 110 angeordnet ist, dass der Begriff "oberhalb" näher zu dem Äußeren des Gehäuses 110 bedeutet und der Begriff "unterhalb" näher zu dem Innenraum des Gehäuses 110.

Wie in Fig. 2 ersichtlich ist, weist der Stopfen 1 einen Stopfenkopf 10 und einen integral mit dem Stopfenkopf 10 ausgebildeten Stopfenkörper 14 auf.

An dem Stopfenkörper 14 sind des Weiteren ein Dichtbereich 30, der direkt unterhalb des Stopfenkopfs 10 liegt und ein direkt unterhalb des Dichtbereichs 30 liegender Verbindungsbereich 20 angeordnet.

Der Stopfenkörper 14 ist zumindest im Wesentlichen hülsenförmig ausgebildet, d.h. dass der Stopfenkörper 14 zumindest bereichsweise einen ringförmigen Querschnitt aufweist, und zwar derart, dass ein Außendurchmesser des Stopfenkopfs 10 zwischen 10 % und 40 %, bevorzugt 15 % und 40 %, besonders bevorzugt zwischen 20 % und 30 %, größer ist als ein Außendurchmesser des Stopfenkörpers 14, insbesondere in einem Bereich unterhalb des Verbindungsbereichs 20.

In FIG. 2 ist darüber hinaus erkennbar, dass ein in Axialrichtung A des Stopfens 1 gesehener unterer Bereich des Stopfenkörpers 14 angefast sein kann. Dies erleichtert sowohl die Fertigung als auch die Montage des Stopfens 1, insbesondere das Einführen des Stopfens 1 in die Öffnung 120. Eine solche Anfasung geht beim Herstellungsprozess nämlich mit einer leichteren Entformbarkeit einher. Dadurch können kostenintensive und aufwändige Auswurfmechanismen vermieden werden. Auch kann der Stopfen 1 beim Montieren durch die Anfasung bereits vorzentriert werden.

Der Verbindungsbereich 20 dient zum Verbinden des erfindungsgemäßen Stopfens 1 mit einer Öffnung 120 in dem Gehäuse 110, insbesondere in dem Gehäusedeckel, des Energiespeichersystems 100. Dazu kann der Verbindungsbereich 20 ein Außengewinde 22 aufweisen, das mit einem entsprechenden Innengewinde der Öffnung 120 in Eingriff kommt.

Genauso gut ist es allerdings auch denkbar, dass der Verbindungsbereich 20 als Steckverbindung ausgebildet ist. Dadurch wird vorteilhafterweise die Montage des erfindungsgemäßen Stopfens 1 erleichtert. Dazu kann der Verbindungsbereich 20 Rastnasen zum Eingreifen in eine entsprechend ausgebildete Geometrie in der Öffnung 120 aufweisen, derart, dass eine form- und/oder kraftschlüssige Verbindung zwischen dem Stopfen 1 und der Öffnung 120 entsteht.

Der Dichtbereich 30 ist dazu ausgelegt, ein Dichtelement 32 aufzunehmen.

Das Dichtelement 32 weist dabei bereits in einem nicht-eingebauten Zustand des Stopfens 1, welcher mit einem unverformten Zustand des Dichtelements 32 einhergeht, eine zumindest im Wesentlichen von einer Kreisform verschiedene Formgebung auf.

Erfindungsgemäß weist das Dichtelement 32 im Querschnitt im Wesentlichen eine L-Form auf. In diesem Zusammenhang bedeutet im Wesentlichen eine L-Form, zum einen dass der Querschnitt des Dichtelements 32 zwei Schenkel aufweist die einen Winkel einschließen, welcher zwischen 80° und 100°, bevorzugt zwischen 85° und 95°, besonders bevorzugt 90°, beträgt, und zum anderen dass die Kanten und/oder Ecken des Dichtelements 32 abgerundet bzw. kurvenförmig ausgebildet sein können.

Das Dichtelement 32 weist insbesondere einen ersten Bereich auf, der in Richtung einer dem Verbindungsbereich 20 zugewandten Seite des Dichtelements 32 ausgebildet ist, sowie einen zweiten Bereich auf einer dem Verbindungsbereich abgewandten Seite des Dichtelements 32.

Dabei ist das Dichtelement 32 auch schon im nicht-eingebauten Zustand des Stopfens 1, bzw. dem unverformten Zustand des Dichtelements 32, derart geformt, dass der zweite Bereich des Dichtelements 32 einen größeren Außendurchmesser aufweist als der erste Bereich. Genauer gesagt erstreckt sich der erste Bereich des Dichtelements 32 im Wesentlichen in Axialrichtung A des Stopfens 1, wohingegen der zweite Bereich des Dichtelements 32 sich im Wesentlichen in einer radialen Richtung des Stopfens 1, welche senkrecht zu der Axialrichtung A des Stopfens 1 liegt, nach außen hin erstreckt.

In diesem Zusammenhang bedeutet im Wesentlichen in Axialrichtung A des Stopfens 1, dass die Erstreckungsrichtung sich weniger als 10°, bevorzugt weniger als 5°, besonders bevorzugt weniger als 3° von der Axialrichtung A des Stopfens 1 unterscheidet.

Es ist denkbar, dass der erste Bereich und der zweite Bereich nicht direkt ineinander übergehen, sondern vielmehr über einen Übergangsbereich miteinander verbunden sind. Dieser Übergangsbereich kann beispielsweise noch einen zusätzlichen Bereich, der sich in eine dem ersten Bereich entgegengesetzte Richtung erstreckt, derart, dass das Dichtelement 32 beispielsweise einen im Wesentlichen T-förmigen Querschnitt ausbildet.

Der Stopfen 1 kann ferner im Dichtbereich 30 eine entlang eines Umfangs des Stopfens 1 verlaufende Nut 12 aufweisen, welche dazu ausgelegt ist, das Dichtelement 32 aufzunehmen. Insbesondere kann das Dichtelement 32 direkt in die Nut 12 angespritzt werden. Dadurch ergibt sich vorteilhafterweise eine sichere, insbesondere stoffschlüssige, Verbindung.

Das Dichtelement 32 wird in Axialrichtung A des Stopfens 1 gesehen nach oben durch den Stopfenkopf 10 und nach unten durch einen umlaufenden Vorsprung 40 begrenzt. Der umlaufende Vorsprung 40 ist zwischen dem Dichtelement 32 und dem Verbindungsbereich 20 angeordnet und dazu ausgelegt, das Dichtelement 32 um 2 mm bis 6 mm, bevorzugt um 3 mm bis 5 mm von dem Verbindungsbereich 20, insbesondere einem in Axialrichtung A des Stopfens 1 gesehen obersten Gewindegang des Verbindungsbereichs 20 zu beabstanden.

Der Stopfen kann aus einem ersten Kunststoffmaterial gefertigt sein. Insbesondere eignet sich als erstes Kunststoffmaterial ein thermoplastisches Material, wie beispielsweise Polyethylen, Polypropylen, Polyamid, Acrylnitril-Butadien-Styrol, Polybutylenterephthalat, Polyetherimid, Polyimid, Polytetrafluorethylen, und/oder Polyoxymethylen.

Das Dichtelement 32 kann aus einem zweiten Kunststoffmaterial gefertigt sein, welches verschieden von dem ersten Kunststoffmaterial ist. Insbesondere handelt es sich bei dem zweiten Kunststoffmaterial um ein elastisches Material, wie beispielsweise ein Elastomer, thermoplastisches Elastomer, Silikon, und/oder eine silikonähnliche Substanz.

Dabei kann der erfindungsgemäße Stopfen einfach und kostengünstig über einen Zwei-Komponenten-Spritzgussprozess hergestellt werden. Dadurch wird ferner eine gute Verbindung zwischen dem Stopfen 1 und dem Dichtelement 32 gewährleistet. Insbesondere kann nämlich beim Anspritzen des Dichtelements 32 an den Stopfen 1, insbesondere in die Nut 12 des Stopfens 1, die äußerste Oberfläche des Stopfens 1 bzw. der Nut 12 aufschmelzen, so dass eine stoffschlüssige Verbindung zwischen dem Dichtelement 32 und dem Stopfen 1 entsteht.

Das Dichtelement 32 ist ferner derart ausgebildet, dass das Dichtelement 32 vollständig um den Stopfen 1 umlaufend ausgebildet ist.

Ferner ist das Dichtelement 32 rotationssymmetrisch ausgebildet, was ebenso die Kosten senkt, da das Werkzeug für ein symmetrisches Dichtelement 32 weniger aufwändig zu gestalten ist.

Der erfindungsgemäße Stopfen 1 basiert auf der Erkenntnis, dass es vorteilhaft ist, wenn das Dichtelement 32 im eingebauten Zustand des Stopfens 1 durch eine vollständig in Axialrichtung A des Stopfens 1 wirkende Kraft verformt wird. Dies wirkt insbesondere einer Reduzierung der Dichtwirkung durch das "Setzen" der zu verbindenden Elemente des Stopfens 1 entgegen, und zwar dadurch dass im eingebauten Zustand des Stopfens 1 eine Kräftekopplung zwischen der zumindest teilweise, insbesondere vollständig, in Axialrichtung A des Stopfens 1 wirkenden Kraft und einer Rückstellkraft, welche durch das Material des Dichtelements 32 auf Grundlage der zumindest teilweise, insbesondere vollständig, in Axialrichtung A des Stopfens 1 wirkenden Kraft verursacht wird, vorliegt.

Insbesondere kann eine Dichtwirkung des Dichtelements 32 durch die vollständig in Axialrichtung A des Stopfens 1 wirkende Kraft erzeugt werden.

Das Dichtelement 32 ist dabei vorteilhafterweise nur durch den umlaufenden Vorsprung 40 von dem Verbindungsbereich 20 beabstandet. Dadurch kann ein kraftreduzierendes Längen des Stopfenkörpers 14 unterbunden werden.

FIG. 3 zeigt die den erfindungsgemäßen Stopfen 1 aufnehmende Öffnung 120 in einem Gehäuse 110 eines Energiespeichersystems 100. Insbesondere ist in FIG. 3 eine Dichtrippe 130 dargestellt, welche sich entlang eines inneren Umfangs der den Stopfen 1 aufnehmenden Öffnung 120 in Richtung eines Äußeren des Energiespeichersystems 100 erstreckt. Diese Dichtrippe 130 ist dazu ausgelegt, mit dem Dichtelement 32 des Stopfens 1 im eingebauten Zustand des Stopfens 1 in Eingriff zu kommen.

Unter dem inneren Umfang der den Stopfen 1 aufnehmenden Öffnung 120 versteht man den Umfang eines den Stopfenkörper 14 aufnehmenden Bereichs der Öffnung 120. Genauer gesagt weist die Öffnung 120 mindestens zwei verschiedene Bereiche mit unterschiedlichen Durchmessern auf. Der erste Bereich entspricht einer Senkung und ist dazu ausgelegt, den Stopfenkopf 10 aufzunehmen. Der zweite Bereich weist einen Durchmesser auf, der kleiner ist als der Durchmesser des ersten Bereichs, und der dazu ausgelegt ist, den Stopfenkörper 14, insbesondere den Verbindungsbereich 20, aufzunehmen.

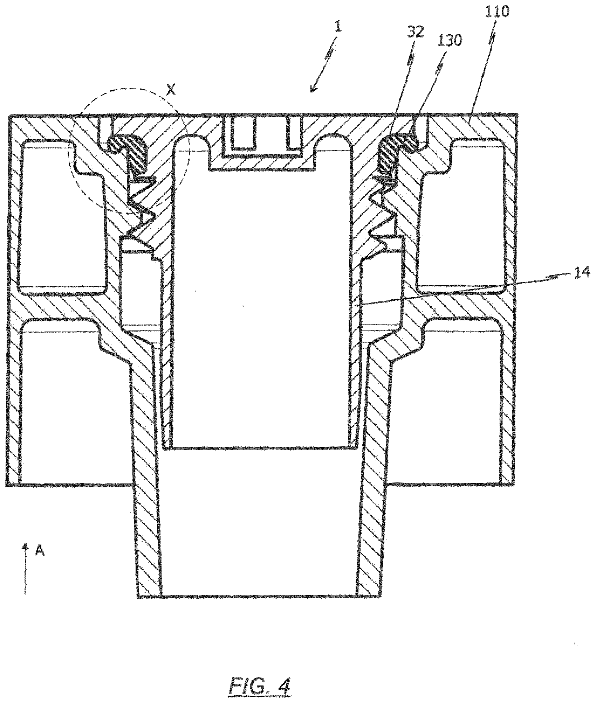

FIG. 4 zeigt den erfindungsgemäßen Stopfen 1 im eingebauten Zustand, in welchem der Stopfen 1 mit der Öffnung 120 - in diesem Fall exemplarisch über eine Schraubverbindung - verbunden ist. Dabei ist ersichtlich, dass die Dichtrippe 130 das Dichtelement 32, insbesondere den zweiten Bereich des Dichtelements 32, durch eine zumindest im Wesentlichen in Axialrichtung A des Stopfens 1 wirkende Kraft verformt.

Durch eine geeignete Materialwahl des Dichtelements 32, insbesondere dadurch dass das Dichtelement 32 aus einem elastischen Material gefertigt ist, entsteht eine vorteilhafte Kräftekopplung im eingebauten Zustand des Stopfens 1, d.h. im verformten Zustand des Dichtelements 32. Dadurch dass nämlich die Dichtrippe 130 eine in Axialrichtung A des Stopfens 1 wirkende Kraft auf das Dichtelement 32 erzeugt, und das Dichtelement 32 eine Rückstellkraft erzeugt, welche in entgegengesetzter Richtung der von der Dichtrippe 130 erzeugten Axialkraft wirkt, kann die Dichtwirkung des Dichtelements 32 auch bei hohen thermischen und/oder mechanischen (dynamischen) Einflüssen aufrechterhalten werden, welche ansonsten eine Reduzierung der beiden Kräfte bewirken könnte, beispielsweise durch Veränderung der Werkstoffeigenschaften oder durch Erzeugen von "Setz"-Bewegungen,. Unter "Setzen" oder "Setz"-Bewegungen wird ein Verlust der Vorspannkraft der Verbindung verstanden.

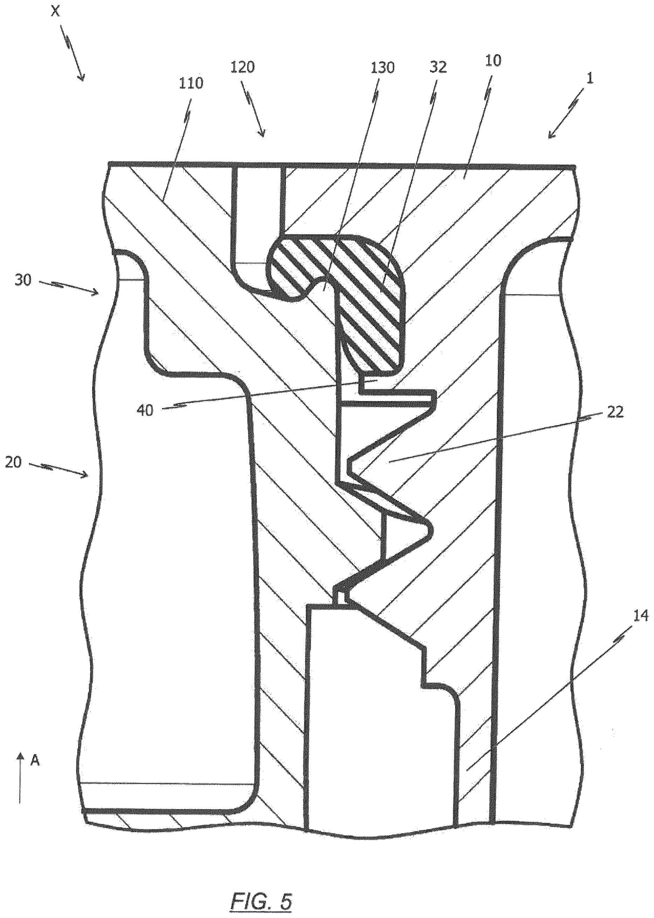

FIG. 5 zeigt den in FIG. 4 mit einem gestrichelten Kreis markierten Bereich X in einer Detailansicht. Darin ist gut zu erkennen, dass das Dichtelement 32 ausschließlich in Axialrichtung A des Stopfens 1 verformt wird und insbesondere nicht in einer radialen Richtung. Dies führt vorteilhafterweise zu einer einfachen Montage des Stopfens 1 in dem Gehäuse.

Auch ist erkennbar, dass der Stopfenkopf 10 bündig mit einer Außenseite des Gehäuses 110 abschließt. Dadurch kann beispielsweise eine Verletzungsgefahr an etwaigen scharfen Kanten vermieden werden, was die Handhabungssicherheit steigert.

Auch wenn dies nicht explizit in den Figuren dargestellt ist, kann der Stopfen 1 auch in einem Gehäuse 120 eines Energiespeichermoduls oder einer Energiespeicherzelle eingesetzt werden.

Auch kann der Verbindungsbereich 20 des Stopfens 1 anstelle des Außengewindes 22 als Steckverbindung ausgebildet sein. Dies vereinfacht die Montage des Stopfens 1 in der Öffnung 120 weiter. Dabei könnten ferner an dem Stopfenkörper 14 angeordnete Rastnasen, welche dazu ausgelegt sind, mit entsprechenden Ausnehmungen in der Öffnung 120 zusammenzuwirken, einen Formschluss ausbilden.

### Bezugszeichenliste

- 1: Stopfen
- 10: Stopfenkopf
- 12: Nut
- 14: Stopfenkörper
- 20: Verbindungsbereich
- 22: (Außen)Gewinde
- 30: Dichtbereich
- 32: Dichtelement
- 40: umlaufender Vorsprung
- 100: Energiespeichersystem
- 110: Gehäuse
- 120: Öffnung
- 130: Dichtrippe
- 200: Fahrzeug
- A: Axialrichtung des Stopfens
- X: Detailansicht

## Patentansprüche

1. Stopfen (1) zum Verschließen und Abdichten einer Öffnung (120) in einem Gehäuse (110) eines Energiespeichersystems (100), insbesondere zum Verschließen und Abdichten einer Öffnung (120) in einem Gehäuse (110) eines Bleisäure-Akkumulators, wobei der Stopfen (1) Folgendes aufweist:
- einen Verbindungsbereich (20), der dazu ausgebildet ist, mit der Öffnung (120) des Energiespeichersystems (100) in Eingriff zu kommen; und
- einen in Axialrichtung (A) des Stopfens (1) oberhalb des Verbindungsbereichs (20) angeordneten Dichtbereich (30),
wobei der Dichtbereich (30) dazu ausgebildet ist, ein Dichtelement (32) aufzunehmen, welches dazu ausgelegt ist, im eingebauten Zustand des Stopfens (1) durch eine vollständig in Axialrichtung (A) des Stopfens (1) wirkende Kraft verformt zu werden,
wobei ein Querschnitt des Dichtelements (32), insbesondere schon in einem nicht-eingebauten Zustand des Stopfens (1), zumindest im Wesentlichen eine L-Form aufweist,
wobei das Dichtelement (32) einen ersten Bereich auf einer dem Verbindungsbereich (20) zugewandten Seite des Dichtelements (32) und einen zweiten Bereich auf einer dem Verbindungsbereich (20) abgewandten Seite des Dichtelements (32) aufweist,
wobei der zweite Bereich des Dichtelements (32) bereits in einem nicht-eingebauten Zustand des Stopfens (1) einen größeren Außendurchmesser aufweist als der erste Bereich,
wobei der Dichtbereich (30) dazu ausgebildet ist, das Dichtelement (32) derart aufzunehmen, dass eine Dichtwirkung des Dichtelements (32) durch die vollständig in Axialrichtung (A) des Stopfens (1) wirkende Kraft erzeugt wird, und
wobei das Dichtelement (32) vollständig umlaufend und rotationssymmetrisch ausgebildet ist.

2. Stopfen (1) nach Anspruch 1,
wobei in einem eingebauten Zustand des Stopfens (1) das Dichtelement (32), insbesondere der zweite Bereich des Dichtelements (32), dazu ausgebildet ist, in Eingriff mit einer Dichtrippe (130) zu stehen, welche sich entlang eines inneren Umfangs der den Stopfen (1) aufnehmenden Öffnung (120) in der Axialrichtung (A) des Stopfens (1) gesehen nach oben in Richtung des Dichtbereichs (30) des Stopfens (1) erstreckt, und welche dazu ausgelegt ist, die vollständig in Axialrichtung (A) des Stopfens (1) wirkende Kraft auf das Dichtelement (32), insbesondere auf den zweiten Bereich des Dichtelements (32), auszuüben.

3. Stopfen (1) nach Anspruch 1 oder 2,
wobei der Stopfen (1) im Dichtbereich (30) eine entlang eines Umfangs des Stopfens (1) verlaufende Nut (12) aufweist, in welche das Dichtelement (32) zumindest bereichsweise angespritzt ist.

4. Stopfen (1) nach einem der Ansprüche 1 bis 3,
wobei der Stopfen (1) aus einem ersten Kunststoffmaterial, insbesondere aus einem thermoplastischen Material, gefertigt ist, insbesondere spritzgegossen ist.

5. Stopfen (1) nach einem der Ansprüche 1 bis 4,
wobei das Dichtelement (32) aus einem zweiten Kunststoffmaterial, insbesondere einem Elastomer, thermoplastischen Elastomer, Silikon und/oder einer silikonähnlichen Substanz, gefertigt ist.

6. Stopfen (1) nach einem der Ansprüche 1 bis 5,
wobei der Stopfen (1) von der Öffnung (120) des Gehäuses (110) des Energiespeichersystems (100) vollständig aufnehmbar oder aufgenommen ist, und zwar derart, dass der Stopfen (1) mit einer Außenseite des Gehäuses (110) bündig abschließt.

7. Stopfen (1) nach einem der Ansprüche 1 bis 6,
wobei der Verbindungsbereich (20) des Stopfens (1) ein Außengewinde (22) zum form- und kraftschlüssigen Verbinden des Stopfens (1) mit der Öffnung (120) aufweist.

8. Stopfen (1) nach einem der Ansprüche 1 bis 7,
wobei der Verbindungsbereich (20) als Steckverbindung ausgebildet ist zum form- und/oder kraftschlüssigen Verbinden des Stopfens (1) mit der Öffnung (120).

9. Stopfen (1) nach einem der Ansprüche 1 bis 8,
wobei in dem Dichtbereich (30) zwischen dem Dichtelement (32) und dem Verbindungsbereich (20) ein umlaufender Vorsprung (40) angeordnet ist, durch welchen das Dichtelement (32) um 2 mm bis 6 mm, bevorzugt um 3 mm bis 5 mm, von dem Verbindungsbereich (20), insbesondere einem in der Axialrichtung (A) des Stopfens (1) gesehen obersten Gewindegang des Verbindungsbereichs (20), beabstandet ist.

10. Stopfen (1) nach einem der Ansprüche 1 bis 9,
wobei das Dichtelement (32), insbesondere der erste Bereich des Dichtelements (32), auch im eingebauten Zustand des Stopfens (1) in radialer Richtung des Stopfens (1) zumindest im Wesentlichen unverformt ist.

11. Energiespeichersystem (100) zum Einsatz in einem Fahrzeug (200), das Folgendes aufweist:
- eine Vielzahl von Energiespeicherzellen; und
- ein Gehäuse (110), das dazu ausgelegt ist, die Vielzahl von Energiespeicherzellen aufzunehmen, und das mindestens eine Öffnung (120), insbesondere mindestens eine Füllöffnung zum Füllen des Gehäuses (110) mit einem flüssigen Elektrolyten, aufweist,
wobei jeweils eine Öffnung (120) mit Hilfe eines der jeweiligen Öffnung (120) zugeordneten Stopfens (1) nach einem der Ansprüche 1 bis 10 verschließbar oder verschlossen ist.

## Claims

1. Plug (1) for closing off and sealing off an opening (120) in a housing (110) of an energy-storage system (100), in particular for closing off and sealing off an opening (120) in a housing (110) of a lead-acid storage battery, wherein the plug (1) has the following:
- a connecting region (20), which is configured to come into engagement with the opening (120) of the energy-storage system (100); and
- a sealing region (30), which is arranged above the connecting region (20) in an axial direction (A) of the plug (1),
wherein the sealing region (30) is configured to receive a sealing element (32) which is designed to be deformed, in the fitted state of the plug (1), by a force acting entirely in the axial direction (A) of the plug (1), wherein a cross section of the sealing element (32) has at least substantially an L shape, in particular already in a non-fitted state of the plug (1),
wherein the sealing element (32) has a first region on a side of the sealing element (32) that is directed towards the connecting region (20), and has a second region on a side of the sealing element (32) that is directed away from the connecting region (20),
wherein the second region of the sealing element (32) has a larger outer diameter than the first region already in a non-fitted state of the plug (1), wherein the sealing region (30) is configured to receive the sealing element (32) in such a way that a sealing action of the sealing element (32) is generated by the force acting entirely in the axial direction (A) of the plug (1), and
wherein the sealing element (32) is of fully encircling and rotationally symmetrical form.

2. Plug (1) according to Claim 1,
wherein, in a fitted state of the plug (1), the sealing element (32), in particular the second region of the sealing element (32), is configured to be in engagement with a sealing rib (130), said sealing rib extending upwards in the direction of the sealing region (30) of the plug (1), as seen in the axial direction (A) of the plug (1), along an inner periphery of the opening (120) that receives the plug (1) and being configured to exert the force acting entirely in the axial direction (A) of the plug (1) on the sealing element (32), in particular on the second region of the sealing element (32).

3. Plug (1) according to Claim 1 or 2,
wherein, in the sealing region (30), the plug (1) has a groove (12) which extends along a periphery of the plug (1) and into which the sealing element (32) is at least regionally injection-moulded.

4. Plug (1) according to one of Claims 1 to 3,
wherein the plug (1) is manufactured, in particular is injection moulded, from a first plastic material, in particular from a thermoplastic material.

5. Plug (1) according to one of Claims 1 to 4,
wherein the sealing element (32) is manufactured from a second plastic material, in particular an elastomer, thermoplastic elastomer, silicone and/or silicone-like substance.

6. Plug (1) according to one of Claims 1 to 5,
wherein the plug (1) is able to be or is received fully by the opening (120) of the housing (110) of the energy-storage system (100), and specifically in such a way that the plug (1) terminates flush with an outer side of the housing (110).

7. Plug (1) according to one of Claims 1 to 6,
wherein the connecting region (20) of the plug (1) has an external thread (22) for form-fitting and force-fitting connection of the plug (1) to the opening (120).

8. Plug (1) according to one of Claims 1 to 7,
wherein the connecting region (20) is configured as a plug-in connection for form-fitting and force-fitting connection of the plug (1) to the opening (120).

9. Plug (1) according to one of Claims 1 to 8,
wherein, in the sealing region (30), between the sealing element (32) and the connecting region (20), there is arranged an encircling projection (40) by way of which the sealing element (32) is spaced apart by 2 mm to 6 mm, preferably by 3 mm to 5 mm, from the connecting region (20), in particular from an uppermost thread turn, as seen in the axial direction (A) of the plug (1), of the connecting region (20).

10. Plug (1) according to one of Claims 1 to 9,
wherein the sealing element (32), in particular the first region of the sealing element (32), is at least substantially undeformed in a radial direction of the plug (1), even in the fitted state of the plug (1).

11. Energy-storage system (100) for use in a vehicle (200), having the following:
- a multiplicity of energy-storage cells; and
- a housing (110), which is configured to receive the multiplicity of energy-storage cells and which has at least one opening (120), in particular at least one filling opening for filling the housing (110) with a liquid electrolyte,
wherein in each case an opening (120) is able to be or is closed off with the aid of a plug (1) according to one of Claims 1 to 10 that is assigned to the respective opening (120).

## Revendications

1. Bouchon (1) pour fermer et étanchéifier une ouverture (120) dans un boîtier (110) d'un système de stockage d'énergie (100), notamment pour fermer et étanchéifier une ouverture (120) dans un boîtier (110) d'un accumulateur au plomb-acide, le bouchon (1) présentant les éléments suivants :
- une zone de liaison (20), qui est réalisée pour venir en engagement avec l'ouverture (120) du système de stockage d'énergie (100) ; et
- une zone d'étanchéité (30) agencée au-dessus de la zone de liaison (20) dans la direction axiale (A) du bouchon (1),
dans lequel la zone d'étanchéité (30) est réalisée pour recevoir un élément d'étanchéité (32) qui est conçu pour être déformé à l'état monté du bouchon (1) par une force agissant entièrement dans la direction axiale (A) du bouchon (1),
dans lequel une section transversale de l'élément d'étanchéité (32), notamment déjà à un état non monté du bouchon (1), présente au moins essentiellement une forme en L,
dans lequel l'élément d'étanchéité (32) présente une première zone sur un côté de l'élément d'étanchéité (32) tourné vers la zone de liaison (20) et une deuxième zone sur un côté de l'élément d'étanchéité (32) détourné de la zone de liaison (20),
dans lequel la deuxième zone de l'élément d'étanchéité (32) présente déjà, dans un état non monté du bouchon (1), un diamètre extérieur plus grand que la première zone,
dans lequel la zone d'étanchéité (30) est réalisée pour recevoir l'élément d'étanchéité (32) de telle sorte qu'un effet d'étanchéité de l'élément d'étanchéité (32) est produit par la force agissant entièrement dans la direction axiale (A) du bouchon (1), et
dans lequel l'élément d'étanchéité (32) est réalisé sous forme entièrement périphérique et symétrique en rotation.

2. Bouchon (1) selon la revendication 1,
dans lequel, dans un état monté du bouchon (1), l'élément d'étanchéité (32), notamment la deuxième zone de l'élément d'étanchéité (32), est réalisé pour être en prise avec une nervure d'étanchéité (130), qui s'étend vers le haut le long d'une circonférence intérieure de l'ouverture (120) recevant le bouchon (1), vu dans la direction axiale (A) du bouchon (1), en direction de la zone d'étanchéité (30) du bouchon (1), et qui est conçue pour exercer la force agissant entièrement dans la direction axiale (A) du bouchon (1) sur l'élément d'étanchéité (32), notamment sur la deuxième zone de l'élément d'étanchéité (32).

3. Bouchon (1) selon la revendication 1 ou 2,
dans lequel le bouchon (1) présente dans la zone d'étanchéité (30) une rainure (12) s'étendant le long d'une circonférence du bouchon (1), dans laquelle l'élément d'étanchéité (32) est injecté au moins par zones.

4. Bouchon (1) selon l'une quelconque des revendications 1 à 3,
dans lequel le bouchon (1) est fabriqué, notamment moulé par injection, à partir d'une première matière plastique, notamment à partir d'une matière thermoplastique.

5. Bouchon (1) selon l'une quelconque des revendications 1 à 4,
dans lequel l'élément d'étanchéité (32) est fabriqué dans une deuxième matière plastique, notamment un élastomère, un élastomère thermoplastique, de la silicone et/ou une substance analogue à la silicone.

6. Bouchon (1) selon l'une quelconque des revendications 1 à 5,
dans lequel le bouchon (1) peut être entièrement reçu ou est reçu par l'ouverture (120) du boîtier (110) du système de stockage d'énergie (100), et ce de telle sorte que le bouchon (1) affleure avec un côté extérieur du boîtier (110).

7. Bouchon (1) selon l'une quelconque des revendications 1 à 6,
dans lequel la zone de liaison (20) du bouchon (1) présente un filetage extérieur (22) pour relier le bouchon (1) à l'ouverture (120) par complémentarité de forme et par adhérence.

8. Bouchon (1) selon l'une quelconque des revendications 1 à 7,
dans lequel la zone de liaison (20) est réalisée sous forme de liaison par emboîtement pour relier le bouchon (1) à l'ouverture (120) par complémentarité de forme et/ou par adhérence.

9. Bouchon (1) selon l'une quelconque des revendications 1 à 8,
dans lequel, dans la zone d'étanchéité (30), entre l'élément d'étanchéité (32) et la zone de liaison (20), est agencée une saillie périphérique (40) par laquelle l'élément d'étanchéité (32) est espacé de 2 mm à 6 mm, de préférence de 3 mm à 5 mm, de la zone de liaison (20), notamment d'un pas de vis le plus haut de la zone de liaison (20), vu dans la direction axiale (A) du bouchon (1).

10. Bouchon (1) selon l'une quelconque des revendications 1 à 9,
dans lequel l'élément d'étanchéité (32), notamment la première zone de l'élément d'étanchéité (32), est au moins essentiellement non déformé dans la direction radiale du bouchon (1), même à l'état monté du bouchon (1).

11. Système de stockage d'énergie (100) destiné à être utilisé dans un véhicule (200), présentant les éléments suivants :
- une pluralité de cellules de stockage d'énergie ; et
- un boîtier (110) qui est conçu pour recevoir la pluralité de cellules de stockage d'énergie et qui présente au moins une ouverture (120), notamment au moins une ouverture de remplissage pour remplir le boîtier (110) avec un électrolyte liquide,
dans lequel une ouverture (120) respective peut être fermée ou est fermée à l'aide d'un bouchon (1) selon l'une quelconque des revendications 1 à 10 associé à l'ouverture (120) respective.
